# EUROPEAN PATENT SPECIFICATION

(11) **EP 2 959 761 B1**
(45) Date of publication and mention of the grant of the patent: **11.01.2017**
(21) Application number: 14194286.2
(22) Date of filing: 21.11.2014
(51) Int. Cl.: A01C 3/06

(54) **Manure spreader**
Miststreuer
Épandeur de fumier

(30) Priority: 27.06.2014 JP 2014133416
(43) Date of publication of application: 30.12.2015
(73) Proprietor: Takakita Co., Ltd., Nabari-City Mie 518-0441 (JP)
(72) Inventor: Sirasaki, Yosiharu, Nabari-City, Mie 518-0441 (JP); Kumazawa, Yasuhiro, Nabari-City, Mie 518-0441 (JP)
(74) Representative: Müller Hoffmann & Partner

(56) References cited:
- WO-A1-2012/005405
- FR-A1- 2 949 290
- US-A1- 2009 026 284

## Description

### BACKGROUND OF THE INVENTION

### 1. Field of the Invention

The present invention relates to a manure spreader configured to spread manure on a cargo bed over a farm field by rotating a beater, and more particularly to a manure spreader that allows a foreign matter caught in the beater to be easily removed.

### 2. Description of the Related Art

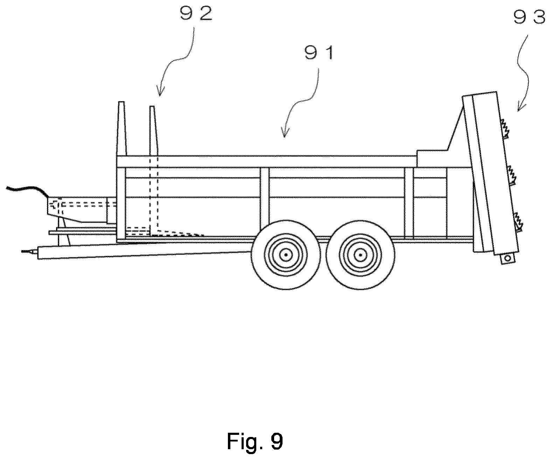

To spread manure in a relatively large farm, a manure spreader for spreading a fertilizer by rotating a beater is generally employed. Referring to Fig. 9, the manure spreader includes a transport unit 92 that transports backward the manure loaded in a cargo box 91, and a plurality of beaters 93 that rotate so as to spread the manure over a large area.

The manure may contain a foreign matter such as a stone, and when the foreign matter is caught in the beater the rotation is stopped. In such a case, the transport unit in the cargo box is reversely moved in the forward direction to create a space between the beater and the manure thereby allowing the foreign matter to be removed, or a bottom plate provided in a lower portion of the beater is opened to remove the foreign matter.

However, in the case of reversely moving the transport unit to create a space between the manure and the beater, the operator has to climb on the cargo box and remove the foreign matter from the upper side, and in the case of opening the bottom plate of the cargo box to remove the foreign matter the operator has to crawl under the bottom plate. In either case, when the foreign matter is located at a deep position of the manure the operator is forced to take an unnatural posture to remove the foreign matter, and therefore it takes a long time to remove the foreign matter.

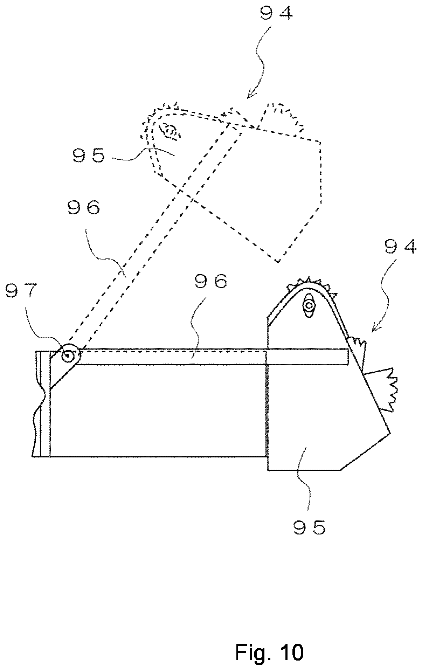

As a solution to the above, Japanese Unexamined Patent Application Publication No. 2002-142515 proposes a manure spreader configured to open the rear end of the cargo box by lifting up the frame on which the beater is mounted. Referring to Fig. 10, the manure spreader is configured to lift up a frame 95 on which a beater 94 is mounted with left and right arms 96, and move, when lifting up the frame 95, a non-illustrated driving gear provided on a side face of the cargo box and a beater driving gear provided on a side face of the frame 95 away from each other, so as to open the rear end of the cargo box. Such a mechanism allows the rear end of the cargo box to be opened by lifting up the frame 95, thereby allowing the foreign matter to be removed.

However, the mechanism for lifting up the frame including the beater so as to open the rear end of the cargo box has the following drawbacks.

To open the frame 95 in the manure spreader according to the above-cited literature, the frame 95 is lifted up with the driving gear and the beater driving gear spaced from each other, and when the lifted frame 95 is returned to the initial position the teeth of the driving gears may interfere with the frame, thus to be damaged.

Further, the manure spreader is configured to lift up the frame 95 about a fulcrum 97 of the arm 96, and in the case where the arm 96 is long the frame 95 is lifted up in a generally vertical direction. In such a case a heavy load is imposed when the foreign matter is caught in the beater 94, because the foreign matter and the manure are lifted up together.

In addition, whereas the left and right arms 96 have to be lifted at the same angle to lift up the frame 95, in case that the load balance between left and right sides is lost because of the presence of the foreign matter, the arm 96 may be distorted and deformed.

A similar manure spreader, with the features of the preamble of claim 1, is disclosed in US 2009/0026284

. The present invention has been accomplished in view of the foregoing problem, and provides a manure spreader that allows a frame including a beater to be lifted up with a simple structure thereby enabling a rear end of a cargo box to be opened, without moving driving gears on the frame away from each other.

### SUMMARY OF THE INVENTION

In an aspect, the present invention provides a manure spreader including a transport unit that transports manure loaded in a cargo box, a spreading unit that that spreads the transported manure over a farm field by causing a plurality of beaters rotatably supported by a frame to rotate, and a driver unit including a horizontal drive shaft that collectively causes the beaters of the spreading unit to rotate. The drive shaft is located at an upper end portion of the frame and the frame is made to pivot about the drive shaft, so as to open a rear end portion of the cargo box.

With the manure spreader thus configured, since the frame is opened about the drive shaft located at the upper end portion of the frame, the rear end of the cargo box can be opened without the need to move the driving gears away from each other. In addition, the frame is moved away from the rear end of the cargo box upon being opened, and therefore a foreign matter caught in the beater is prevented from being lifted up together with the frame.

The mentioned manure spreader may further include a backward shift mechanism that shifts the frame backward with a pressing force of the manure transported by the transport unit, and a control unit that stops the transport unit with the backward shift of the frame caused by the backward shift mechanism, and the frame may be made to pivot about the drive shaft after being set to the backward-shifted position.

With the mentioned configuration, since the transport is stopped upon shifting the frame backward, the foreign matter can be safely removed when the frame is opened, because the transport of the manure is stopped.

The mentioned manure spreader may further include a limitation device that restricts the backward shift of the frame, and the frame may be made to pivot backward after the restriction of the limitation device is cancelled.

In this case, the control of the transport and the opening of the frame can be switched between each other by restricting and permitting the backward movement of the frame, in the configuration that allows controlling of the manure transport by shifting the frame backward.

As stated above, in the manure spreader including the transport unit that transports the manure loaded in the cargo box, the spreading unit that that spreads the transported manure over a farm field by causing the plurality of beaters rotatably supported by the frame to rotate, and the driver unit including the horizontal drive shaft that collectively causes the beaters of the spreading unit to rotate, the drive shaft is located at the upper end portion of the frame and the frame is made to pivot about the drive shaft, so as to open the rear end portion of the cargo box. Therefore, the rear end of the cargo box can be opened without the need to move the driving gears away from each other. In addition, the frame is moved away from the rear end of the cargo box upon being opened, and therefore a foreign matter caught in the beater is prevented from being lifted up together with the frame.

### BRIEF DESCRIPTION OF THE DRAWINGS

Fig. 1 is a left side view of a manure spreader according to an embodiment of the present invention;
Fig. 2 is a right side view of the manure spreader according to the embodiment of the present invention;
Fig. 3 is a drawing showing a spreading unit according to the embodiment;
Fig. 4 is a drawing showing a frame in Fig. 2 shifted backward;
Fig. 5 is an enlarged left side view of a portion in the vicinity of the frame according to the embodiment;
Fig. 6 is a drawing showing the frame in Fig. 5 shifted backward;
Fig. 7 is a side view of the frame according to the embodiment, set to an open position;
Figs. 8A to 8C are drawings showing a control unit according to the embodiment;
Fig. 9 is a drawing showing a conventional manure spreader; and
Fig. 10 is a drawing showing another conventional manure spreader.

### DESCRIPTION OF THE PREFERRED EMBODIMENTS

Hereafter, an embodiment of the present invention will be described with reference to the drawings.

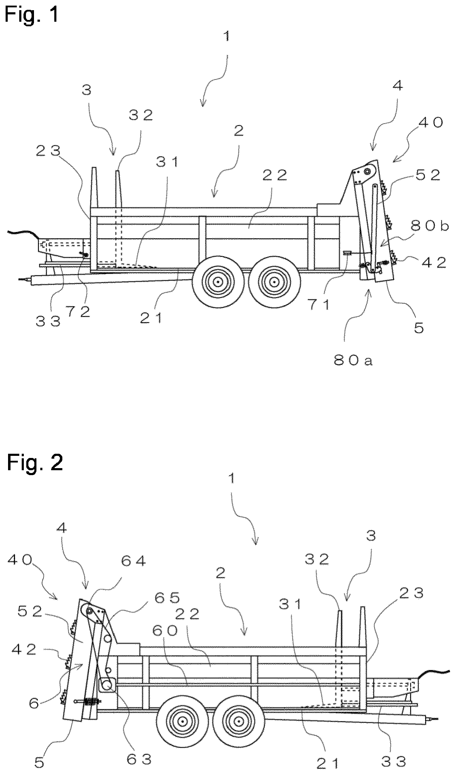

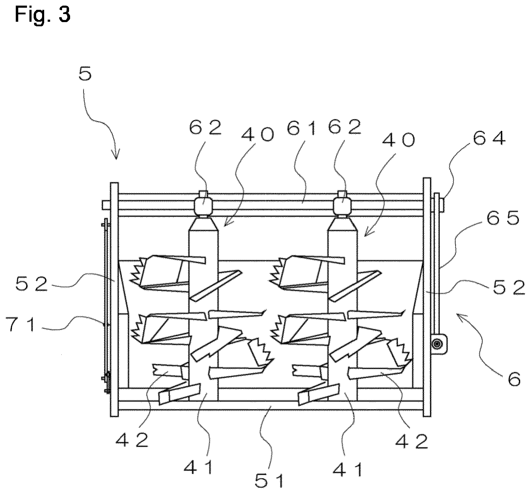

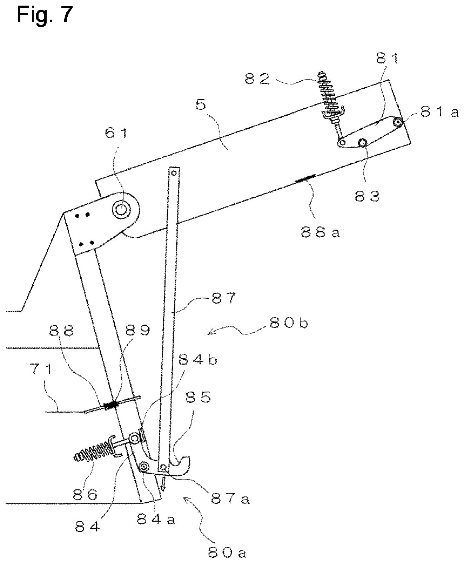

A manure spreader 1 according to the embodiment includes, as shown in Fig. 1 and Fig. 2, a cargo box 2 to be loaded with manure, a transport unit 3 that transports backward the manure in the cargo box 2, and a spreading unit 4 that spreads the manure transported backward by rotating a plurality of beaters 40. As a distinctive feature, as shown in Fig. 3, the manure spreader 1 also includes a frame 5 that rotatably supports a rotary shaft 41 of each of the beaters 40, and a drive shaft 61 that drives the rotary shafts 41 of the respective beaters 40, the drive shaft 61 being disposed at an upper end portion of the frame 5, and the lower end portion of the frame 5 is opened up about the drive shaft 61 as shown in Fig. 7, so as to allow a foreign matter caught in the beater to be removed. The details of the manure spreader 1 according to this embodiment will be described hereunder.

The cargo box 2 is formed in a box shape so that the manure can be loaded therein, and includes left and right sidewalls 22, a front wall 23, and a bottom plate 21, so that the manure is loaded from above.

The transport unit 3 serves to transport backward the manure loaded in the cargo box 2, and includes, in this embodiment, a bottom contact plate 31 disposed in contact with the bottom plate 21, an upright pressing plate 32 erected from the front edge of the bottom contact plate 31 at a right angle in an L-shape, and a press rod 33 that presses the upright pressing plate 32 backward so as to transport the manure backward. The press rod 33 is moved back and forth by a hydraulic pressure from a traction vehicle towing the manure spreader 1, transmitted through a hydraulic hose provided forward of the cargo box 2 and connected to the traction vehicle. Here, although the transport unit 3 is composed of the bottom contact plate 31 and the upright pressing plate 32 coupled in the L-shape, a conveyor or the like may be employed to transport the manure backward.

The spreading unit 4 serves to spread the manure backward over a farm field and includes, as shown in Fig. 3, a plurality of vertical beaters (hereinafter, simply beater 40) each having a rotary shaft 41. The beater 40 includes spreading blades 42 attached to the outer circumferential surface of the rotary shaft 41 oriented in an up-down direction, and a driver unit 6 causes the rotary shaft 41 to rotate so as to spread the manure. The lower end portion of the rotary shaft 41 of the beater 40 is rotatably supported by a lower frame 51 of the frame 5 constituting a rectangular frame body, and sidewall frames 52 are erected from the respective sides of the lower frame 51, so as to define an opening in the front-back direction. The upper end portion of the rotary shaft 41 of the beater 40 is rotatably attached via a bevel gear 62 to a drive shaft 61 extending between the left and right sidewall frames 52. To cause the drive shaft 61 to rotate, rotational driving force from a power take off (PTO) of the traction vehicle is transmitted through a transmission rod 60 provided on the side face of the cargo box 2 as shown in Fig. 2, so that a first sprocket 63 provided on the right side of the cargo box 2 is caused to rotate by the driving force. A chain 65 is engaged with the first sprocket 63 so as to cause a second sprocket 64 provided in an upper portion of the frame 5 to rotate. When the second sprocket 64 is made to rotate, the horizontal drive shaft 61 connected to the second sprocket 64 as shown in Fig. 3 is made to rotate, and therefore the rotary shaft 41 to which the spreading blades 42 are attached is made to rotate, via the bevel gear 62 attached to the drive shaft 61.

When the manure is transported backward under the mentioned configuration, the transport rate of the manure and the spreading rate of the beater 40 have to be balanced. Accordingly, in this embodiment a backward shift mechanism 80a is provided to shift the frame 5 backward and control the transport rate of the manure.

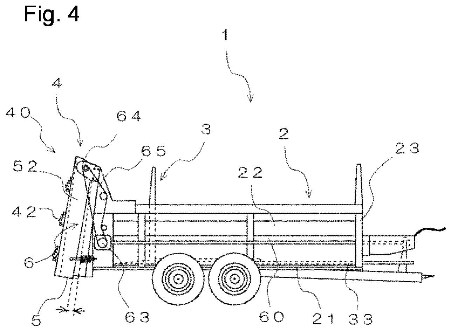

The backward shift mechanism 80a is configured to shift the frame 5 backward about the drive shaft 61. To be more detailed, the rear end portion of the sidewall 22 of the cargo box 2 is extended upward so as to rotatably support the sidewall frame 52 via the drive shaft 61 as shown in Fig. 4 and some other drawings, thus to allow the lower end portion of the frame 5 to pivot backward about the drive shaft 61.

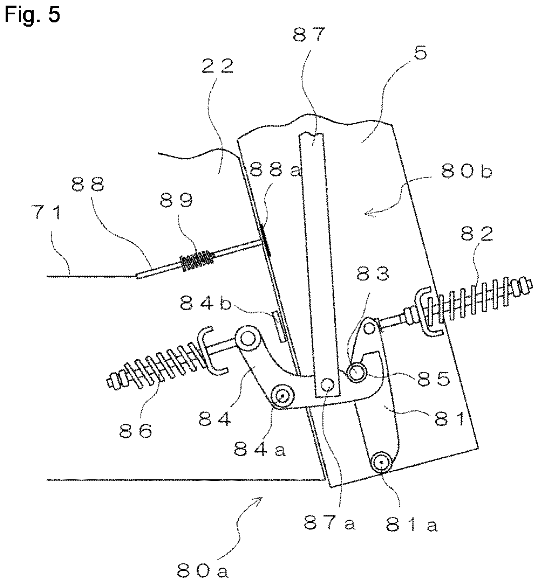

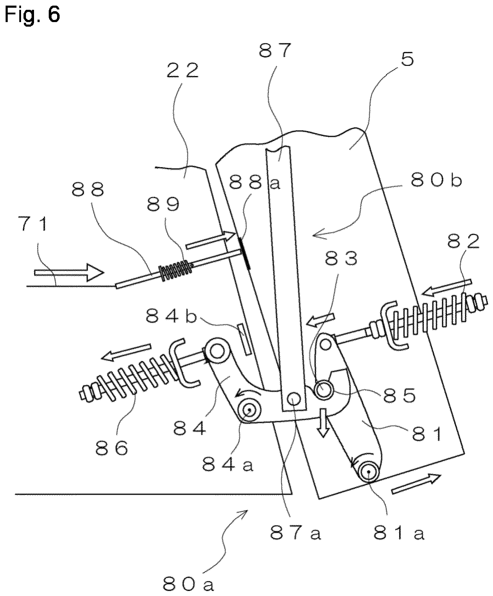

Referring to Fig. 5 and Fig. 6, the backward shift mechanism 80a will be described in further details. Fig. 5 and Fig. 6 illustrate a portion in the vicinity of the frame 5 and the left sidewall 22 of the cargo box 2, and a reference numeral 81 designates a backward shift limitation member attached to the frame 5. The backward shift limitation member 81 is set to pivot about a pivotal fulcrum 81a located at the lower end portion, and constantly biased backward (to the right in Fig. 5 and Fig. 6) by a spring 82 attached to the upper end portion. A pin 83 is disposed so as to stick out in the vicinity of the center of the backward shift limitation member 81, and to be engaged with a recess 85 formed in a frame movement switching member 84. The frame movement switching member 84 is set to pivot about a pivotal fulcrum 84a supported by the left sidewall 22 of the cargo box 2, and constantly biased to the left by a spring 86 so as to engage the recess 85 of the frame movement switching member 84 with the pin 83 of the backward shift limitation member 81 in a normal state. A numeral 88 designates a backward shift detection pin that controls the transport of the manure according to the extent of the backward shift of the frame 5, the backward shift detection pin 88 being set to press a stopper 88a on the frame 5 via a spring 89 attached to the left sidewall 22.

When the lower end portion of the frame 5 is made to pivot about the drive shaft 61 provided at the upper end portion of the frame 5 under the mentioned configuration, as shown in Fig. 6 the backward shift limitation member 81 is made to pivot forward (to the left in Fig. 6) about the pivotal fulcrum 81a provided at the lower end portion, and hence the pin 83 is also moved to the left lower side. As the frame 5 is made to shift further backward, the spring 82 attached to the upper end portion of the backward shift limitation member 81 is compressed to the maximum extent, and therefore the backward shift limitation member 81 is restricted from pivoting further. At this point, even though the manure is pressing the frame 5 backward, the frame 5 is restricted from moving further backward since the pin 83 of the backward shift limitation member 81 is engaged with the recess 85 of the frame movement switching member 84.

When the frame 5 is shifted backward as above, the backward shift detection pin 88 pressing the stopper 88a of the frame 5 sides backward and hence a wire 71 is pulled backward. When the wire 71 is pulled, a control unit 7 is activated to control the transport rate of the manure.

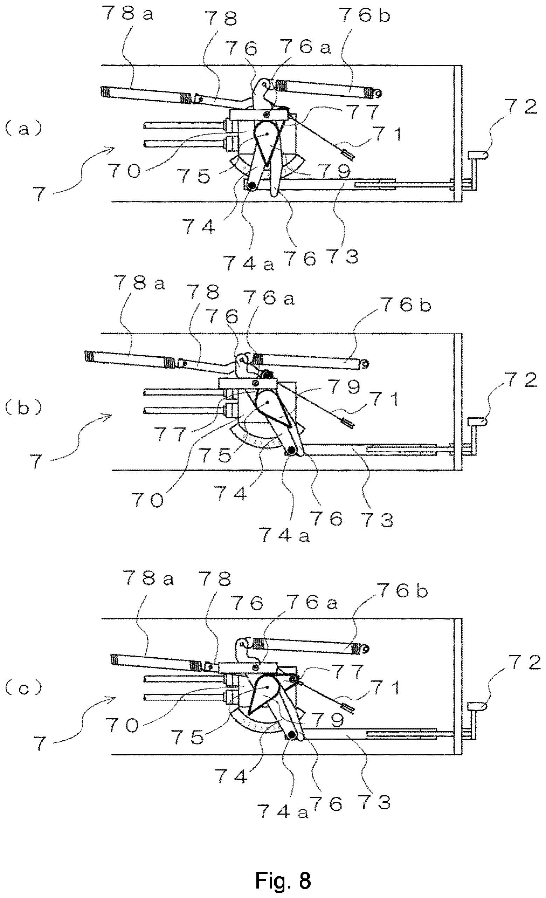

The control unit 7 serves to adjust the hydraulic flow rate with a flow control valve 70 provided in the front end portion of the cargo box 2 to thereby control the speed of the press rod 33 as shown in Figs. 8A to 8C. Thus, the hydraulic flow rate is mechanically controlled in this embodiment. The flow control valve 70 is adjusted by a transport rate setting handle 72 provided on the front face of the cargo box 2, such that the press rod 33 is stopped when an indicator 79 is set to "0", and moved at a highest speed when the indicator 79 is set to "8". To control the transport rate, a rod 73 is made to move to the left or right in Figs. 8A to 8C by rotating the transport rate setting handle 72, by which the lower end of a pendulum lever 74 connected to the rod 73 via a pin 74a is made to move to the left or right. The pendulum lever 74 is set to pivot about a fulcrum 75, and the pin 74a projecting from the lower end portion of the pendulum lever 74 is set to abut the left lower end portion of a lever 76 (see Figs. 8B and 8C). Here, although the pendulum lever 74 and the lever 76 are spaced from each other in Fig. 8A to clearly illustrate the positional relationship, these levers are located as shown in Fig. 8B when the wire 71 is not pulled. Upon rotating the transport rate setting handle 72 so as to move the rod 73 to the right, the pin 74a is also made to move to the right and abuts against the left side of the lower end portion of the lever 76, thus to move the upper end portion of the lever 76 to the left. The upper end portion of the lever 76 is constantly biased to the right by a spring 76b. Further, the lever 76 includes a stopper pin 76a projecting in the depth direction of the drawing at a generally central position, so as to abut against the left side of a wire lever 77. The wire lever 77 is set to pivot about a fulcrum 75 independently from the pendulum lever 74 and other levers, so as to adjust the hydraulic pressure of the flow control valve 70 by being pulled to the left by a tension lever 78 constantly biased to the left by a spring 78a. Although the wire lever 77 can pivot to the left when pulled by the spring 78a, the wire lever 77 is restricted from pivoting further upon abutting against the stopper pin 76a of the lever 76.

When the frame 5 is shifted backward by the transported manure with the hydraulic flow rate set as illustrated in Fig. 8B, the wire 71 attached to the frame 5 is pulled backward and the wire lever 77 connected to the wire 71 is pulled to the right against the tensile force of the spring 78a in the control unit 7 provided in the front end portion of the cargo box 2 (Fig. 8C). At this point, the lever 76 is abutted against the pin 74a provided at the lower end portion of the pendulum lever 74 and hence stopped at this position, and the wire lever 77 alone is pulled so as to pivot to the right. Then the flow control valve 70 supported by the wire lever 77 is made to pivot to the right, so as to move the indicator 79 being made to pivot interlocked with the wire lever 77 toward the position of "0", thus to reduce the transport rate. In contrast, when the pressing force of the manure is cancelled and the frame 5 is set back to the initial position, the wire 71 is released from the pulling force and, as shown in Fig. 8B, the wire lever 77 abuts against the stopper pin 76a owing to the tensile force of the spring 78a. Accordingly, the manure is transported at the initial transport rate set by the transport rate setting handle 72.

Despite the transport rate of the manure being controlled as above, a foreign matter such as a stone may be caught in the beater and the rotation of the beater may be stopped. In such a case the control unit 7 is set as shown in Fig. 8C so as to stop the transport of the manure, and then frame 5 is opened under such setting.

The frame 5 is opened by an opening mechanism 80b that causes the frame 5 shifted backward as above to pivot upward as shown in Fig. 7. The opening mechanism 80b includes the frame movement switching member 84 and a hydraulic cylinder 87 attached to the frame 5, and is configured to open the frame 5 by extending the hydraulic cylinder 87. The lower end portion 87a of the hydraulic cylinder 87 is connected to a position between the pivotal fulcrum 84a of the frame movement switching member 84 and the recess 85, and the upper end portion of the hydraulic cylinder 87 is connected to a position upper than the central portion of the frame 5 (see Fig. 1). When the operator extends the hydraulic cylinder 87, first the frame movement switching member 84 is made to pivot about the pivotal fulcrum 84a by the extending movement of the hydraulic cylinder 87, and the pin 83 is disengaged from the recess 85. As the hydraulic cylinder 87 is extended further with the pin 83 disengaged from the recess 85, the upper end portion of the frame movement switching member 84 abuts against a stopper 84b provided on the sidewall 22 of the cargo box 2, so that the frame movement switching member 84 is restricted from moving further. Accordingly, the lower end portion 87a of the hydraulic cylinder 87 is fixed and supported by the frame movement switching member 84 now restricted from moving further, and the frame 5 is lifted up as the hydraulic cylinder 87 is extended. Since the frame 5 is made to pivot about the drive shaft 61 located at the upper end portion thereof, the frame 5 can be lifted up without the need to move the driving gears away from each other, unlike in the conventional manure spreaders. In addition, since the drive shaft 61, about which the frame 5 is made to pivot, is located at the upper end portion of the frame 5, the frame 5 moves backward from the rear end of the cargo box 2, so that the beater 40 is moved away from the manure and the foreign matter. Therefore, the foreign matter can be removed upon thus opening the frame 5, and after that the frame 5 is closed again.

When the frame 5 is opened, the backward shift limitation member 81 is moved to the right by the biasing force of the spring 82, and the recess 85 of the frame movement switching member 84 is located at its lowermost position by the extension of the hydraulic cylinder 87. Upon closing the frame 5 in this state, the recess 85 of the frame movement switching member 84 is made pivot upward, so that finally the pin 83 is engaged with the recess 85.

As described thus far, the manure spreader 1 according to the foregoing embodiment includes the transport unit 3 that transports the manure loaded in the cargo box 2, the spreading unit 4 that spreads the transported manure over a farm field by causing the beaters 40 rotatably supported by the frame 5 to rotate, and the driver unit 6 including the horizontal drive shaft 61 that collectively causes the beaters 40 of the spreading unit 4 to rotate, and the drive shaft 61 is located at the upper end portion of the frame 5 and the frame 5 is made to pivot about the drive shaft 61, so as to open the rear end portion of the cargo box 2. Therefore, the rear end of the cargo box 2 can be opened without the need to move the driving gears away from each other. In addition, the frame 5 is moved away from the rear end of the cargo box 2 upon being opened, and therefore a foreign matter caught in the beater 40 is prevented from being lifted up together with the frame 5.

In addition, the manure spreader 1 further includes the backward shift mechanism 80a that shifts the frame 5 backward with the pressing force of the manure transported by the transport unit 3, and the control unit 7 that stops the transport unit 3 with the backward shift of the frame 5 caused by the backward shift mechanism 80a, and the frame 5 is made to pivot about the drive shaft 61 after being set to the backward-shifted position. Therefore, the foreign matter can be safely removed upon opening the frame, because the transport of the manure is stopped.

Further, the frame movement switching member 84 having recess 85, and the pin 83 are provided to restrict the backward shift of the frame 5, and the frame 5 is made to pivot backward after the restriction of the limitation device is cancelled. Therefore, the control of the transport and the opening of the frame can be switched between each other by restricting and permitting the backward movement of the frame, in the configuration that allows controlling of the manure transport by shifting the frame backward.

The present invention is in no way limited to the foregoing embodiment, but may be modified in various manners.

For example, although the vertical beater 40 is employed in the embodiment, the present invention is also applicable to a horizontal beater. In this case also, a horizontal drive shaft that causes a plurality of horizontal beaters may be provided at the upper end portion of the frame 5, and the frame 5 may be made to pivot about the drive shaft.

Further, although the driving system including the first sprocket 63, the chain 65, and the second sprocket 64 is employed to rotate the drive shaft 61 in the foregoing embodiment, a plurality of gears may be meshed with each other to rotate the drive shaft 61, instead of employing the chain 65.

## Claims

1. A manure spreader comprising:
a transport unit (3) that transports manure loaded in a cargo box (2);
a spreading unit (4) that spreads the transported manure over a farm field by causing a plurality of beaters (40) rotatably supported by a frame (5) to rotate; and
a driver unit (6) including a horizontal drive shaft (61) that collectively causes the plurality of beaters (40) of the spreading unit (4) to rotate,
wherein the drive shaft (61) is located at an upper end portion of the frame (5), further **characterised in that** the frame (5) is made to pivot about the drive shaft (61), so as to open a rear end portion of the cargo box (2).

2. The manure spreader according to Claim 1, further comprising:
a backward shift mechanism (80a) that shifts the frame (5) backward with a pressing force of the manure transported by the transport unit (3); and
a control unit (7) that stops the transport unit (3) with the backward shift of the frame (5) caused by the backward shift mechanism (80a),
wherein the frame (5) is made to pivot about the drive shaft (61) after being set to the backward-shifted position.

3. The manure spreader according to Claim 2, further comprising a limitation device (81) that restricts the backward shift of the frame (5),
wherein the frame (5) is made to pivot backward after the restriction of the limitation device (81) is cancelled.

## Patentansprüche

1. Miststreuer, umfassend:
eine Transporteinheit (3), die in einen Frachtkasten (2) geladenen Mist transportiert;
eine Streueinheit (4), die den transportierten Mist über ein Ackerfeld streut, indem veranlasst wird, dass eine Vielzahl von von einem Rahmen (5) drehbar getragenen Streuwalzen (40) rotiert; und
eine Antriebseinheit (6), die eine horizontale Antriebswelle (61) umfasst, die die Vielzahl von Streuwalzen (40) der Streueinheit (4) gemeinsam rotieren lässt,
wobei die Antriebswelle (61) an einem oberen Endabschnitt des Rahmens (5) gelegen ist, ferner **dadurch gekennzeichnet, dass**
man den Rahmen (5) um die Antriebswelle (61) schwenken lässt, um einen rückwärtigen Endabschnitt des Frachtkastens (2) zu öffnen.

2. Miststreuer nach Anspruch 1, ferner umfassend:
einen Mechanismus (80a) für eine rückwärtsgerichtete Verschiebung, der den Rahmen (5) mit einer Druckkraft des durch die Transporteinheit (3) transportierten Mists rückwärts schiebt; und
eine Steuerungseinheit (7), die die Transporteinheit (3) mit der rückwärtsgerichteten Verschiebung des Rahmens (5) stoppt, die durch den Mechanismus (80a) für eine rückwärtsgerichtete Verschiebung veranlasst wurde,
wobei man den Rahmen (5) um die Antriebswelle (61) schwenken lässt, nachdem er in die rückwärts verschobene Position versetzt ist.

3. Miststreuer nach Anspruch 2, ferner umfassend
eine Begrenzungsvorrichtung (81), die die rückwärtsgerichtete Verschiebung des Rahmens (5) beschränkt,
wobei man den Rahmen (5) rückwärts schwenken lässt, nachdem die Beschränkung der Begrenzungsvorrichtung (81) aufgehoben ist.

## Revendications

1. Epandeur de fumier comprenant :
une unité de transport (3) qui transporte du fumier chargé dans une benne de chargement (2) ;
une unité d'épandage (4) qui épand le fumier transporté sur un champ en provoquant la rotation de plusieurs hérissons (40) supportés en rotation par un châssis (5) ; et
une unité d'entraînement (6) comprenant un arbre d'entraînement horizontal (61) qui provoque collectivement la rotation des hérissons (40) de l'unité d'épandage (4),
l'arbre d'entraînement (61) étant situé sur une partie d'extrémité supérieure du châssis (5), également **caractérisé en ce que**
le châssis (5) est conçu pour pivoter sur l'arbre d'entraînement (61) de manière à ouvrir une partie d'extrémité arrière de la benne de chargement (2).

2. Epandeur de fumier selon la revendication 1, comprenant également :
un mécanisme de déplacement vers l'arrière (80a) qui déplace le châssis (5) vers l'arrière avec une force de pression du fumier transporté par l'unité de transport (3) ; et
une unité de commande (7) qui arrête l'unité de transport (3) avec le déplacement du châssis (5) vers l'arrière provoqué par le mécanisme de déplacement vers l'arrière (80a),
le châssis (5) étant conçu pour pivoter sur l'arbre d'entraînement (61) après avoir été mis dans la position déplacée vers l'arrière.

3. Epandeur de fumier selon la revendication 2, comprenant également un dispositif de limitation (81) qui restreint le déplacement du châssis (5) vers l'arrière,
le châssis (5) étant conçu pour pivoter vers l'arrière une fois que la restriction du dispositif de limitation (81) est neutralisée.
